# EUROPEAN PATENT SPECIFICATION

(11) **EP 2 997 254 B1**
(45) Date of publication and mention of the grant of the patent: **12.09.2018**
(21) Application number: 14732391.9
(22) Date of filing: 13.05.2014
(51) Int. Cl.: F03D 3/06, F03D 3/02

(54) **TOWER-LIKE WIND GENERATOR**
TURMFÖRMIGER WINDGENERATOR
GÉNÉRATEUR ÉOLIEN DU TYPE TOUR

(30) Priority: 15.05.2013 IT SS20130004
(43) Date of publication of application: 23.03.2016
(73) Proprietor: Monaco, Catello Raffaele Filippo, 07026 Olbia (IT)
(72) Inventor: Monaco, Catello Raffaele Filippo, 07026 Olbia (IT)
(74) Representative: Leone, Mario
(86) International application number: PCT/IB2014/061394
(87) International publication number: WO 2014/184732

(56) References cited:
- WO-A1-2005/050007
- WO-A2-2012/060570
- JP-A- 2011 185 101
- US-A1- 2007 297 902
- US-A1- 2008 019 833

## Description

The present invention relates to a tower-like wind turbine, that is with vertical axis, of the type comprising a cradle-like supporting structure which includes and supports a rotor with vertical axis, coaxial thereto, with a central shaft connected to an electric generator.

In general, wind turbines are divided into different categories. Under rotating structures are meant (SR) the mechanical, natural or artificial structures, which, upon rotating around a geometrical axis, make peripheral members, called impeller element, to rotate, which interact with the outside, in order to carry out a function which subject them to wear.

The artificial rotating structures, in particular, transmit the rotation from the inside towards the outside of the structure, and in this case one can speak about direct rotating structures, or from the outside towards the inside, in case of the inverse structures.

The rotor is the portion of the rotating structure which rotates only around the geometrical axis of rotation; it is constituted by a cylindrical central axis, that is the rotor axis, and by a peripheral portion, or peripheral rotor, thereto the impeller elements are connected, directly or indirectly. Under rotor base the structure thereon the rotor rotates in presence of gravity is meant. It can be fixed or it can swivel.

The artificial rotating structures can be classified based upon the features of the rotation geometrical axes, in particular based upon the number thereof and hierarchy, orientation and resting points of the related rotors.

In particular they can be of the type with single geometrical axis, wherein there is only one geometrical axis of rotation and there is a single rotor comprising even the impeller elements. Or they can be of the type with main geometrical axis, wherein there are two or more rotation axes: there is a main rotor therein which makes one or more mechanical axes, called secondary axes, to rotate, around each one thereof an impeller element rotates.

The rotating structures can even be divided into: AZIMUTHAL, with single or main vertical axis; ALTHAL, with single or main horizontal axis; or OBLIQUE, with single or main oblique axis.

Those with main axis comprise nine sub-categories: three with secondary axis orthogonal to the main axis, three with secondary axis parallel to the main axis and at last three with secondary oblique axis, coplanar with respect to the main axis.

Furthermore, an additional distinction can be made based upon the number of the rotor's supports which can be a single one support, provided by the fixed base or by the swivelling one; or of the type with cradle, wherein the rotor is supported by two or more supports, provided by the fixed base (fixed cradle) or by the swivelling one wherein the rotor is supported by two or more supports, provided by the fixed base (fixed cradle) or by the swivelling one (swivelling cradle); of the type with fork, wherein the secondary axis through the rotor or the impeller elements through the secondary axis, are supported on two sides; of the type with counterweight, wherein the secondary axis or the impeller elements are supported only on one side.

Therefore, the crossing of the above-mentioned categories and typologies determines a total of forty-eight different types of rotating structures.

As rotating structures transmitting energy those structures are designated which make the impeller elements to work with the energy provided them by means of the rotation of a rigid rotor axis, said shaft (the direct ones) or the rotor shaft by means of the energy collected by the impellers from outside (the inverse ones).

These energy-transmitting structures can be mobile, i.e. placed on any automotive vehicle (and in such case they are direct), or fixed frames anchored to the ground.

The fixed frames will have a structure comprising a fixed base, adjustable and anchored to the ground, and a possible swivelling base, placed above the fixed base. Thereabove, a single or main rotor is mounted.

They can be both direct and inverse energy-transmitting structures. In all cases, in order to be powerful or precise, they have to confer rigidity to the impellers.

However, the most part of the existing rotating frames have a very wide section on a plane containing the main geometrical axis and a little wide on another central plane, orthogonal thereto, or vice versa. Furthermore, sometimes the section on the other plane result to be not circular. This determines insufficient strength, stability and rigidity of the impellers.

More compact or spheroidal frames would be stiffer and furthermore the rotor should be more stable, as, by summing up the inertia of circular motion of the particles constituting it, it constraints the axis of rotation to the extremes thereof.

In particular the existing wind turbines, both with horizontal axis for wind blade, with single fixed or reclining blade, and with vertical axis, are a little stiff and efficient frames and they cannot adapt to the action of the wind intensity. Documents WO2012/060570 A2, US2007/0297902 A1 and US2008/0019833 A1 are examples of vertical axis wind turbines with orientable blades. The present invention proposes to provide a tower-like wind turbine able to obviate the drawbacks mentioned above, as defined in the enclosed claim 1.

Hereinafter, three embodiment examples of the tower-like wind turbine, that is with vertical axis, will be described: in particular a tower-like turbine with secondary axis parallel to the main axis, both axes arranged vertically (type called AZIMUTH-AZIMUTHAL, see figures 1,2,3,8,9,10,11 and 12), called closeable wind tower; and a tower-like turbine shaped like a dome, called closeable wind dome with coplanar and oblique secondary axis with respect to the vertical main axis (type called OBLIQUE-AZIMUTHAL, see figures 4 to 12); and another turbine given by the combination of the first two turbines, called closeable wind tower-dome (see figures 8,9,10,11,12).

The enclosed drawings will be referred to, wherein:

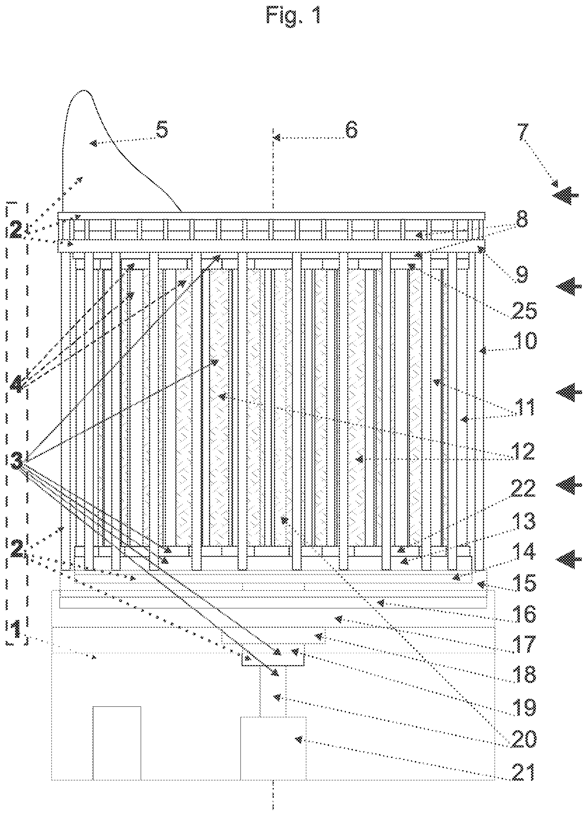

- figure 1 shows an azimuth-azimuthal tower in a front view;

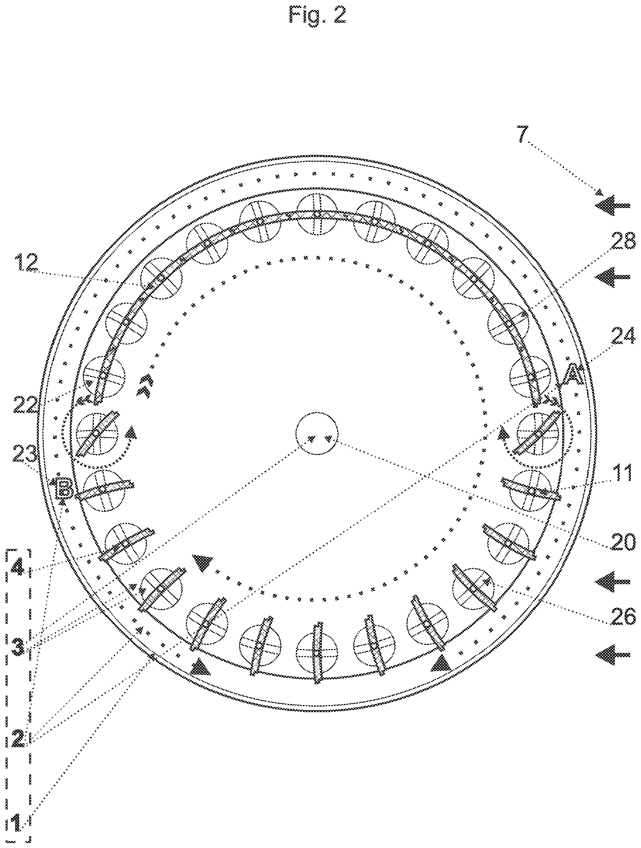

- figure 2 shows a horizontal cut-away view of the tower of figure 1;

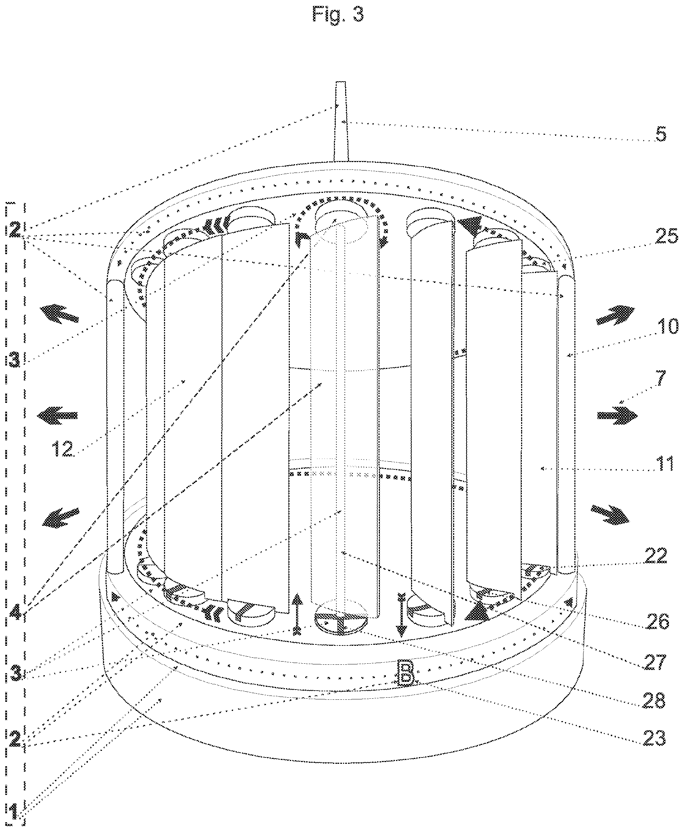

- figure 3 shows a mechanism for reclining by 90° of the wind blades of the tower of figure 1;

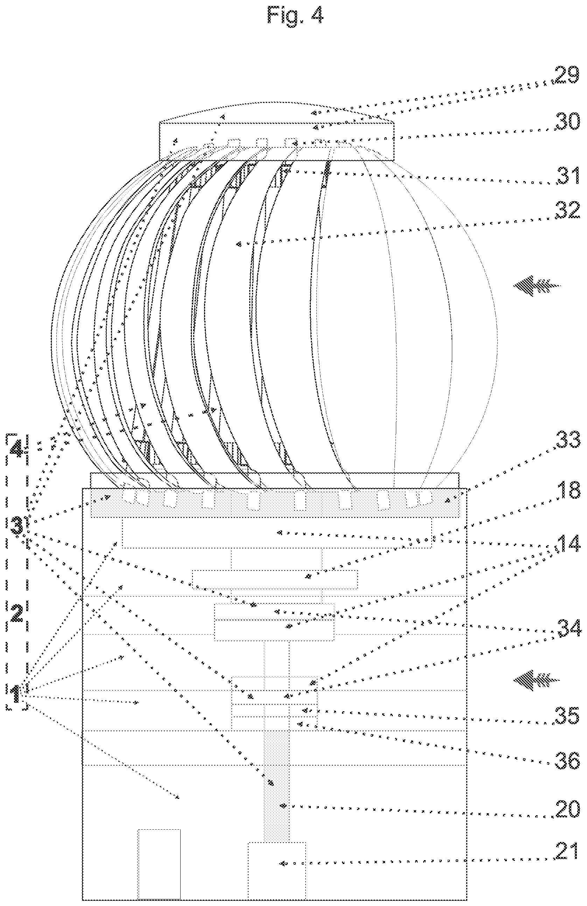

- figure 4 shows a closeable wind dome in a front view, with the base made transparent;

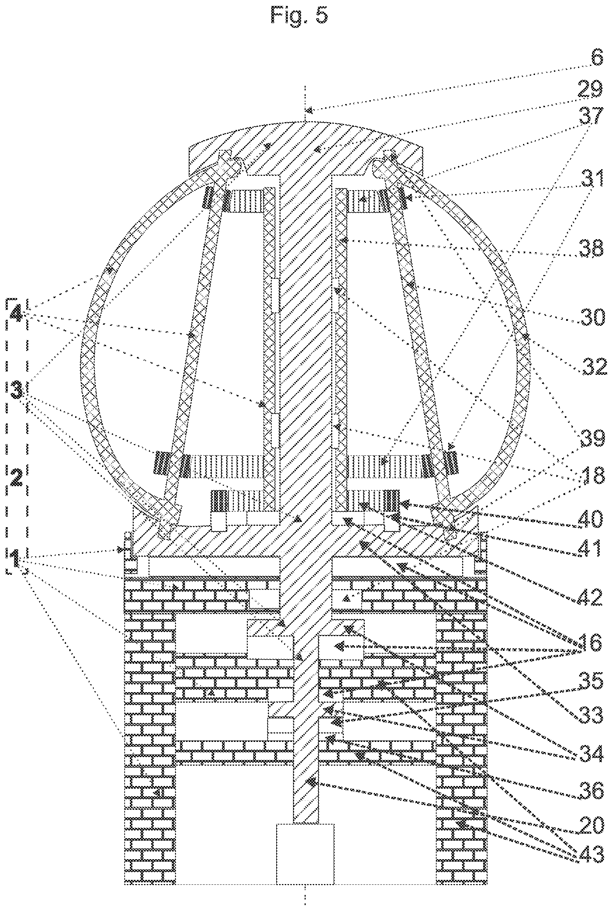

- figure 5 shows a view in longitudinal section of the dome of figure 4;

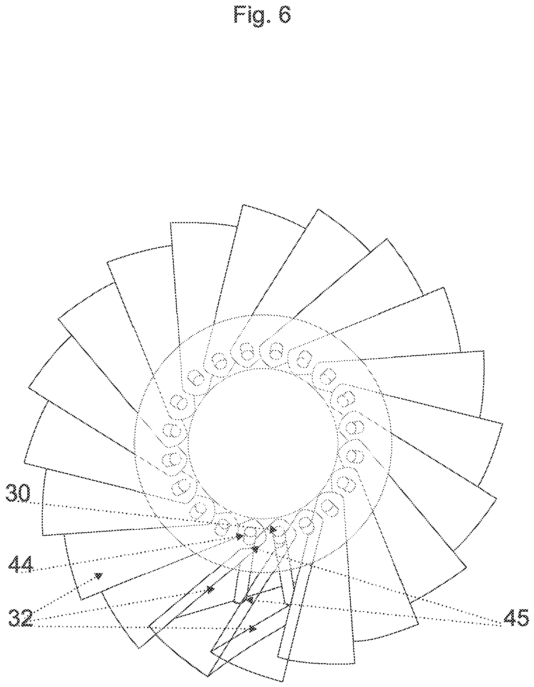

- figure 6 shows said dome with open slices in a top view;

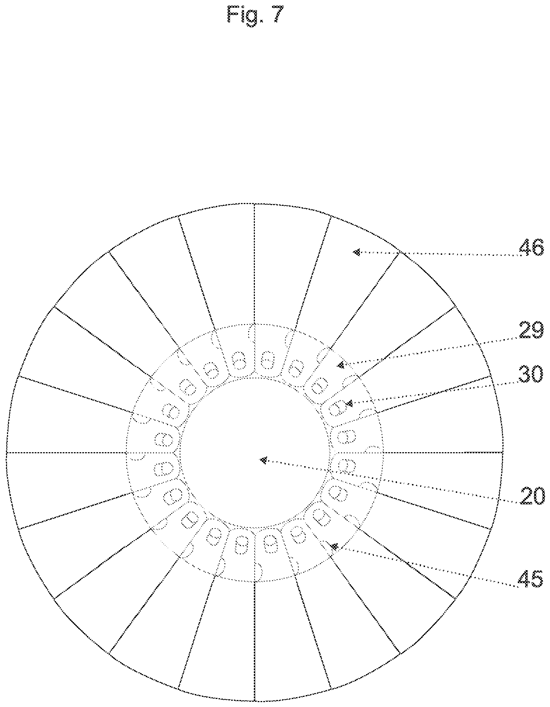

- figure 7 shows said dome with closed slices in the top view;

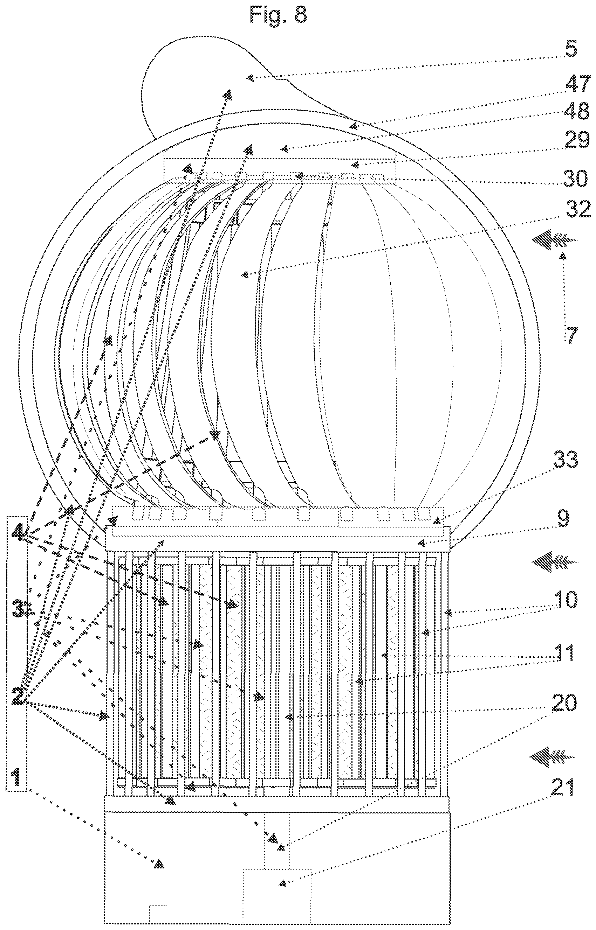

- figure 8 shows a combined closeable wind dome and a wind tower, in a front view;

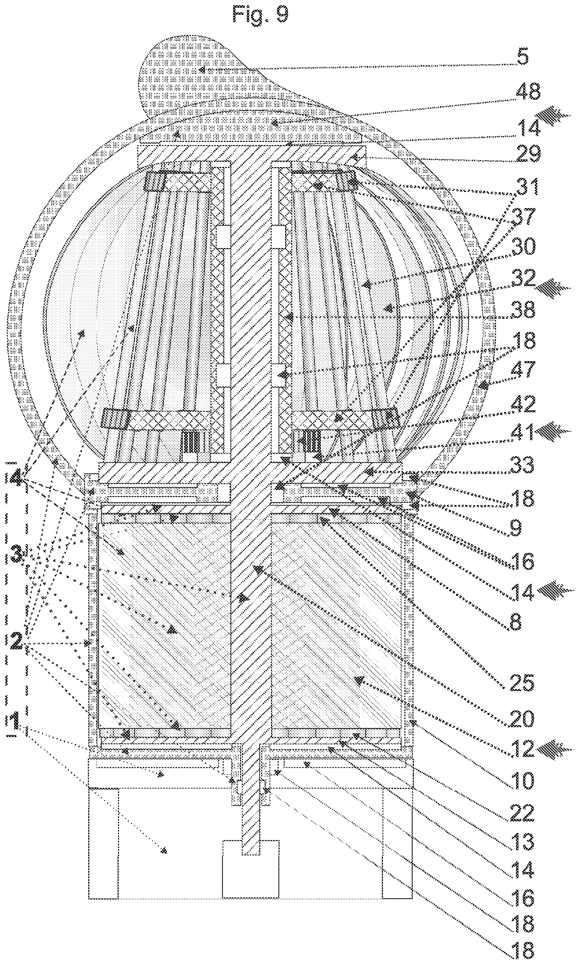

- figure 9 shows said combination of figure 8 opened in vertical cut-away view;

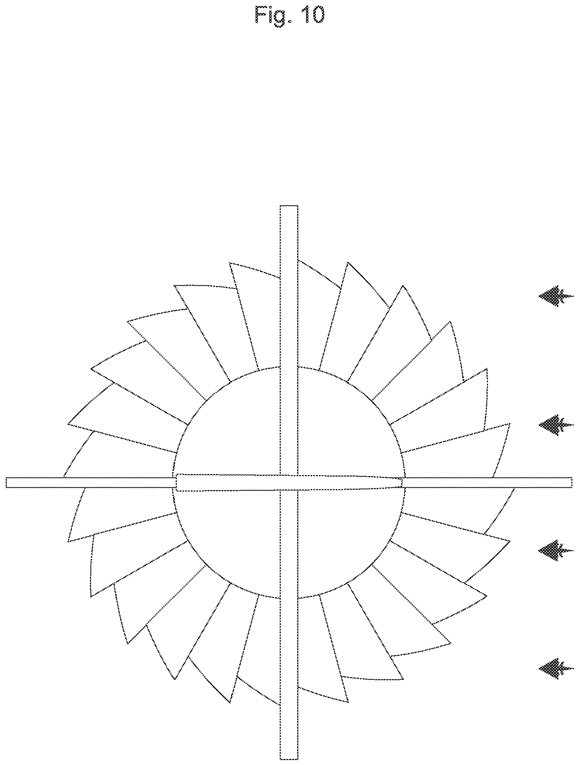

- figure 10 shows said combination of figure 8 opened and in the top view;

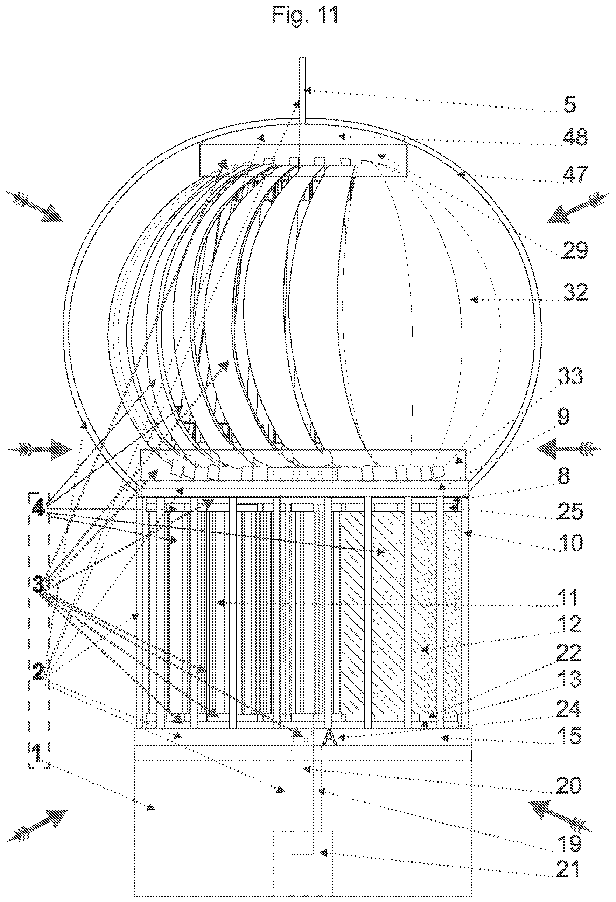

- figure 11 shows said combination of figure 8 in the up-wind side view; and

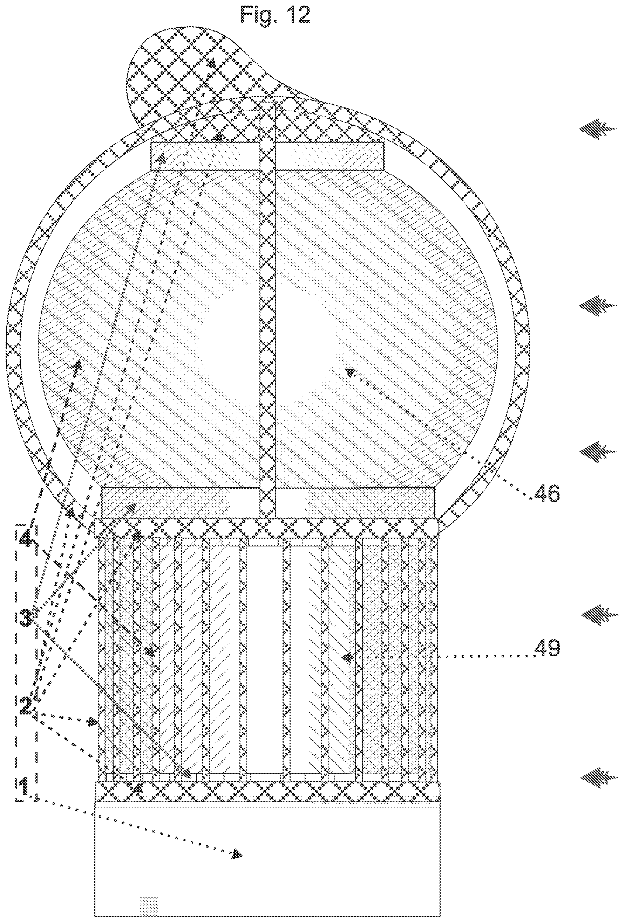

- figure 12 shows said combination of figure 8 closed and in the front view.

In the drawings a fixed base (1) of a tower-like wind turbine, a swivelling base (2), a main rotor (3), the elements equipped with a second rotation (4) are shown.

The frame like a closeable wind tower is of the azimuth-azimuthal type with cradle and fork, that is with vertical main rotor and vertical secondary axes, both ones supported at the two ends and the blades too vertical and reclining around the secondary axis.

The re-closeable wind turbine is constituted by two concentric vertical drums: an inner drum and an outer drum, having the same vertical geometrical axis of symmetry (6) coinciding with the vertical geometrical axis of rotation of the rotor shaft.

The inner drum is the peripheral rotor of the turbine and it is constituted by two horizontal bases shaped like a disk, an upper one (8) and a lower one (13), connected therebetween by a peripheral circular crown of vertical secondary axes equidistant welded at the two bases.

Around each secondary axis a blade placed vertically (11), (12) rotates laterally. The two bases of the inner drum are welded to a vertical rotor shaft (20) passing by the centre thereof reaching an underneath dynamo (21), or another type of electric generator.

The inner drum, together with the rotor shaft, constitutes the rotor (3) of the tower. It rotates inside the outer drum as the wind blades collect the wind push when they are on one side of the tower, whereas they make the wind sliding thereon when they are on the opposite side and travel against the wind.

Each wind blade has a concave-convex horizontal section. It rotates around its own secondary axis (27) to assume two orientations: a radial one (11), to collect the wind push on the concave side thereof; and a tangential one (12), with the concave side towards the inside, which assumes when it is on the opposite side of the tower and it proceeds against the wind.

An upper small disk (25), welded to the blade, rotates therewith and it sustains the weight thereof, weighing upon the upper base-disk of the inner drum by means of a flange resting upon a bearing with mixed load. The upper small disk (25) and the blade are the only two portions of the rotor having a second rotation (4).

Under the blade there is a lower small disk (22) which cannot rotate around itself but it can simply go up and down, as it has pins sliding in vertical grooves inside a compartment wherein it is housed in the lower base of the inner drum. It further has, on the upper surface thereof, two horizontal cross-like slots, a radial one (28) and the tangential other one (26).

Each blade rotates around its own secondary axis together with its upper small disk thereto it is welded and it alternatively penetrates with the lower edge into the radial groove or in the tangential one of the lower small disk thereof, which goes down along the secondary axis in order to release it and it goes up again to fasten it in the new position, both remaining in axis thanks to the secondary axis welded to the bases of the rotor.

By inserting permanent magnets onto the bottom of the blade, or along the inner edge of said compartment, the up-and-down motion of the lower small disk along the secondary axis can be produced by an electro magnet which makes it to go down by inverting the polarity thereof and, once the rotation of the blade has taken place, it makes it to go up by inverting it again.

On the contrary, the outer drum consists of a vertical swivelling cradle (2) including the inner drum and it supports it on the top and on the bottom and it protects it.

The outer drum is formed by two horizontal bases, an upper one (9) and a lower one (15), peripherally joined by small columns (10) and/or framework structures, allowing the wind penetration and they can be coated with a protection grid for the birds.

The upper base of the outer drum is constituted by a circular crown (9), which penetrates a groove of the edge of the horizontal upper disk (8) of the inner drum by supporting it on the upper side and keeping it in axis, by means of a bearing with mixed load.

The lower base (15) of the swivelling cradle, that is of the outer drum, is shaped like a disk and it has a recess wherein the lower base (13) of the inner drum rests, through a bearing with mixed load (14), or an underneath axial one and a surrounding radial one.

The vertical cradle constituted by the outer drum must be swivelling to keep always the same up-wind and down-wind sides. In order to rotate when the wind changes, the outer drum rests upon a mixed or axial bearing (16), and it is kept in axis by a radial bearing (18), allowing it to rotate on a recess of the roof (17) of the underneath fixed base (1). The radial bearing can be placed around a cylindrical engagement (19) of the outer drum in the underneath fixed base.

Furthermore, the outer drum has an overhead rudder (5), placed peripherally, which keeps down-wind, by keeping down-wind and up-wind always the same sides of the outer drum. Otherwise, the outer drum can have a device for detecting the wind direction, actuating an engine which re-aligns it thereto.

In the herein described tower a device for rotating the blades is provided. In fact, the outer drum is swivelling as it has to re-align to the wind (7) when it changes direction. This is necessary as on the outer drum two devices are inserted: one which has to be always up-wind, designated with A (24) and the other one, diametrically opposite to the first one, on the down-wind side, designated with B (23). Such devices, when each blade, upon rotating with the inner drum, reaches them, make it to rotate by 90° on itself.

In fact, A and B are constituted by a projection acting on a switch, or by a laser or infrared control, closing a circuit which, by actuating an engine or an electro-magnet, makes, on the inner drum, the inner small disk of the blade to go down to release it (figure 3). The descent of the lower small disk consequently actuates a series of controls, switches, deflectors or relays which, by actuating the engines arranged on the inner drum at each blade, make that the blade rotates by 90°. Once the rotation is completed, the lower small disk goes up again, by making the blade to penetrate the other slot thereof, thus locking it in the new orientation.

As in the drawings one has chosen to make the inner drum to rotate clockwise, the device A in the up-wind side makes the blade to rotate clockwise (figure 2) by making it to pass from a tangential orientation to a radial orientation, with the concave surface directed against the wind.

Analogously, on the down-wind side of the outer drum, the device B actuates the controls which make the blade(s) to rotate by 90° counter-clockwise, when they gradually are down-wind, by making them to pass from the radial orientation to the tangential one, with the convex surface directed towards the outside and the concave one directed towards the inside (figures 2, 3).

Therefore, on the side travelling against the wind of the inner drum the blades, by hooking the one with the other one, arrive forming a continuous half-cylinder (12) renewing continuously, dismantling on the top at A and reconstructing in the end at B, by remaining always in that position, whereas, on the opposite side of the tower, the blades, arranged radially (11), make sail, by collecting the wind push.

In case of too strong wind or due to maintenance works, by keeping all blades with tangential orientation, not making the rotation to happen to assume the radial one, a complete peripheral hollow cylinder is obtained which makes the rotor insensible to the wind action (49).

Inside such cylinder, apart from the rotor shaft, there will be in case fixed blades, or a second crown of reclining blades, which will remain protected from the wind action too.

For each blade six different controls in sequence are provided:

| | Location | Function | Actuated by |
|---|---|---|---|
| 1 | Lower base disk of the inner drum | It makes the lower small disk to go down. | Alternatively by A and by B. |
| 2 | Bottom of the compartment wherein the lower small disk is housed in the lower base disk of the inner drum | It makes the upper small disk and blade to rotate, alternatively clockwise and counter-clockwise. | Bottom of the lower small disk. |
| 3 | Bottom of the compartment wherein the lower small disk is housed in the lower base disk of the inner drum | It stops the engine of the descent of the lower small disk | Bottom of the lower small disk |
| 4 | Head of end of rotation of the upper small disk in the upper base disk. | It stops the engine of the rotation of the upper small disk and of the blade. | Bilateral spine of the upper small disk |
| 5 | Head of end of rotation of the upper small disk in the upper base disk. | It makes the lower small disk to go up | Bilateral spine of the upper small disk |
| 6 | Bottom of the groove | It stops the engine ascent of the lower small disk | Bottom of the blade. |

Up-wind, the blade first of all meets the device A, actuating the control (1) which makes the grooved lower small disk, arranged under the blade, to go down along the secondary axis, by detaching it therefrom. Then consequently the other controls are actuated, rotating the blade clockwise, by locking it in the new orientation.

The same thing takes place down-wind at the device B with the variant that the deflector control (2), pressed a second time, makes the upper small disk and the blade to rotate counter-clockwise.

By referring to figures 4 to 7, a recloseable wind dome of the type wherein the main axis (6) is vertical, with oblique and coplanar secondary axes (30) with respect thereto, will be described; the dome can be of the type with a single resting element or with the rotor supported by a vertical cradle. The peripheral portion of the rotor (3) is shaped like a spherical segment with two bases; the upper base of the spherical segment is the smaller one. A disk or cover (29), above the spherical segment, is the upper base of the dome and a disk (33), below the spherical segment, is the lower base thereof. Both ones are welded to the vertical rotor shaft (20) passing by the centre of the two bases.

They are connected by slices of sphere which can be tilted laterally (32), all of them with the same gradation, which are the blades collecting the wind, which wind, from any direction it arrives, will penetrate the empty spaces between one slice and the other one. If the tilted slices are fixed, that is welded to the bases, the dome is of the azimuthal type and it is not re-closeable.

In the closeable dome, the slices are reclined laterally through the rotation of each one together with its own secondary axis. By annulling the reclining angle of the slices, the dome closes by becoming a sphere impenetrable to the wind. It can be supported by a crown-like vertical cradle.

The crow-like cradle is a vertical cradle formed by two horizontal bases, an upper one and a lower one. The upper base is shaped like a spherical cover (48), the lower one like a ring or a disk (9). The two bases are joined by curved rays (47), for example segments of meridian, which can be coated by a grid.

As in the previous tower, a device for rotating the blades, that is said slices of sphere giving them a shape, is provided. Each slice (32) in fact is dragged in rotation by the rotation around itself of the oblique secondary axis (30) thereto it is welded.

Each secondary axis is hinged, on the top and at the base (39), respectively to the cover and to the lower base of the dome, and it rotates together with the whole dome, around the vertical main geometrical axis.

The second rotation around itself of the oblique secondary axes, and the consequent rotation of the slices, is determined by the motorised rotation of a hollow cylindrical vertical shaft (38).

Such shaft (38) is placed outside the tract of the rotor shaft engaging into the dome, by containing it; it is uncoupled therefrom by means of radial bearings (18) and it rests upon the lower base of the dome, therefrom it is uncoupled by means of a bearing with mixed load (14). It has, outside the base thereof, a toothed crown (42) engaging two or three pinions (40) with the engines inserted in the base of the dome (41).

When the engines are switched-off and the pinions are braked, these drag the shaft (38) by making it to rotate at the same angular speed of the dome, by keeping it still with respect thereto and to the rotor axis. When the engines are switched on the pinions make the shaft (38) to rotate with respect to the dome and to the rotor axis.

The vertical hollow shaft (38), by rotating on itself, makes two horizontal toothed wheels (37) welded thereto to rotate, which engage two gears (31) place on the top and at the base of each oblique secondary axis by making the latter to rotate on themselves, all together, to the same extent, in the opposite direction.

The rotation of the secondary axes around themselves tilts the slices welded thereto. At the maximum tilting each slice rests laterally on the axis of the previous one (44). Each slice has on one side, the left one in the drawing, two recesses, which are used to favour the above-mentioned rest (45).

By making the vertical hollow shaft (38) to rotate in opposite direction, the slices close, in tangential position (46), by making the dome closed and insensible to the wind.

Furthermore, in the dome flanges (34) of the rotor shaft; a clutch (35); a press (36); and structures (43) of the fixed base can be provided.

By referring to figures 8 to 12, a combination of recloseable tower and wind dome, designated as closeable wind tower-dome which is formed by the overlapping of a dome-like frame closeable on a closeable tower-like frame, both ones rotating in the same direction around a common vertical axis of symmetry passing by the centre of a common rotor shaft. The opportunity of such coupling is due to the fact that the dome alone should have a too high fixed base, whereas the tower alone would be not enough spherical to give maximum precision to the rotation of the rotor.

The tower-dome could be constituted by azimuthal dome and tower, both ones with fixed impellers, or by an azimuth-azimuthal tower dominated by an azimuthal dome with fixed slices, or by an azimuthal tower with fixed blades dominated by an oblique-azimuthal dome and at last by an azimuth-azimuthal tower dominated by an oblique-azimuthal dome, as it is the closeable wind tower-dome.

Even several overlaid towers can be assumed, constituting several floors, overlapped by a dome.

The dome, the mechanical axis of the tower(s) and the single rotor shaft will rotated in the direction of the reclining of the slices of the dome and of the orientation of the blades of the tower(s). The rotation direction of the dome and of the tower chosen for the drawings is clockwise one; that is the empty spaces of the dome and the concave faces of the tower are on the left of the wind. So that the pairs of rotation of the dome and of the tower(s) sum therebetween.

The whole rotor of the closeable wind tower-dome is constituted by the rotor of the dome, by the rotor of the tower and by the single rotor shaft.

In the tower-dome the single vertical rotor shaft (20) starts as from the upper base of the dome (29), thereto it is welded, it crosses the lower base of the dome (33), thereto it is welded, the two bases of the inner drum (8,13) thereto it is welded, and penetrates the underneath fixed base as far as reaching the dynamo or another type of electric generator.

The closeable tower-dome is supported by a swivelling drum-crown-like cradle (2) constituted by a swivelling crown-like cradle overlapped and coupled to a swivelling drum-like cradle, so that together they support the whole tower-dome. The meridians of the dome are welded to the upper base (with circular ring shape) of the underneath drum-like cradle, which therefore even acts as lower base of the crown. The so-formed single base of the drum-crown like cradle penetrates between the lower base of the rotor of the dome and the upper one of the rotor of the tower (figure 9). The single base is uncoupled from the above-mentioned bases by two axial bearings, whereas a radial bearing (18) uncouples it from the rotor shaft.

The swivelling drum-crown-like cradle aligns to the wind by means of a rudder (5), or other device, thereabove, by making that the drum-like cradle to orient for the tower operation.

In the closeable wind tower-dome, upon varying the wind intensity, the tilting of the slices can be varied. Otherwise it is possible to close to the wind the dome or the tower only, or some towers in case there were more than one. At last it is possible to close fully the whole frame (Figure 12) in case of too strong winds or due to maintenance.

Therefore, once this closing is made safe with spare controls and engines, frames with big sizes and power can be implemented.

The big sizes of the frame give inside the fixed base sufficient space to house accumulators, transformers or any devices to store and deliver electric energy produced in exceeds; the big sizes further allow big powers with a reduced number of towers-domes and little consumption of territory. At last, the aesthetics similar to the astronomic observers allows positioning big towers-domes even on the windy peaks of the mountains.

To the above-described tower-like wind turbines a person skilled in the art, in order to satisfy contingent needs, could bring any modification or variant however comprised within the protection scope as defined by the enclosed claims.

## Claims

1. A tower-like vertical axis wind turbine, comprising a cradle-like supporting structure (2) including and supporting a rotor with vertical axis, coaxial thereto, with a central shaft (20) connected to an electric generator, wherein:
• the rotor extends between two horizontal bases (8,13) formed like a disk, welded to the central shaft (20) supported by said supporting structure by means of bearings at respective basements (9,15) of the latter (2), the periphery thereof of said rotor is connected by means of a crown of vertical **blade** axes (27) parallel to the central shaft (20), on each one is engaged a vertical blade which has a horizontal section of concave-convex type (11,12), the blade being apt to be rotated by 90° around its own axis;
• each blade is hung to an upper small disk (25) placed below the upper base of the rotor, the upper small disk being **driven to** rotate said blade therewith;
• the blade engages on the lower side to a respective lower small disk (22), arranged above the lower base of the rotor, in a pair of cross-like grooves in said lower small disk: a first groove arranged tangentially (26) and a second one arranged radially (28), both ones formed on the upper surface of the lower small disk, the lower small disk being housed in a cavity of the lower base, provided with vertical grooves wherein respective spines of the lower small disk are inserted, allowing the translation thereof according to a vertical axis but which prevents the rotation thereof so as to constrain the blade when it is engaged in said **cross-like** grooves;
• the cradle-like supporting structure is swivelling so as to have the same up-wind and down-wind side, the cradle-like supporting structure comprising: a first device (A) (24) of rotation of the blades arranged up-wind, to rotate by 90° the respective blades by changing the orientation thereof from tangential to radial; and a second device (B) (23) of rotation of the blades arranged down-wind, to rotate by 90° the respective blades by changing the orientation thereof from radial to tangential, both rotation devices acting so as to disengage or engage in the respective lower small disks the lower ends of the blades in said grooves, by making said lower small disks to go up and down, the blade remaining hung to the upper small disk, said blade and the respective lower small disk being kept in axis by **said vertical blade** axis **(27);**
so that the blades at the second device (B) arrange tangentially with the respective concave side directed towards the inside by lining up to a half-cylindrical group of concatenated blades (12) lying on the side of the rotor against the wind, whereas the blades at the first device (A), by detaching from said half-cylinder, arrange radially, so that the blades lying on the side in favour of the wind show the concave side thereof to the wind direction (11); and
so that, by activating the second rotation device only (B) it is possible to arrange all blades tangentially to form a complete peripheral cylinder so as to close to the wind said wind turbine (49).

2. The tower-like wind turbine according to claim 1, wherein said cradle-like swivelling supporting structure according to the wind direction is rested by means of bearings on a cylindrical base (1) anchored to the ground, apt to receive the lower end of said central shaft, the electric generator (21) and possible accumulators.

3. The tower-like wind turbine according to claim 1 or 2, wherein, above said upper base of the tower, a re-closeable dome is provided, constituted by a cradle shaped like a crown containing an additional rotor, wherein:
• the above-mentioned rotor is constituted by a spherical segment with two bases extending from a cover-like upper base (29) and a disk-like lower base (33), such bases being joined by a vertical central shaft (20) and an additional central shaft (38) outside and coaxial to the previous central shaft;
• the bases of the rotor are connected peripherally by slices of sphere (32) which constitute respective blades able to collect wind, which can be tilted laterally through the separate rotation of each slice around a respective oblique secondary axis (30), coplanar to said additional central axis, hinged on said bases of the rotor (39) and coupled by means of specific gears (31,37) to the additional central shaft;
• the above-mentioned crown-like cradle comprises a lower base (9), which coincides with the upper base of the supporting structure of the tower, and a cover-like upper base (48), overhanging the one of the rotor of the dome, and uncoupled therefrom, said bases being connected by walls (47) with curved profile, outside the rotor;
• the rotation of the additional central shaft rotates said slices of sphere from a configuration of maximum opening to the wind to a closing configuration of the dome and viceversa.

## Patentansprüche

1. Turmartige Windturbine mit vertikaler Achse, aufweisend eine wiegenartige Tragstruktur (2), die einen Rotor mit vertikaler Achse. koaxial dazu, umfasst und trägt, mit einer zentralen Welle (20), die mit einem elektrischen Generator verbunden ist, wobei:
• sich der Rotor zwischen zwei scheibenförmig geformten horizontalen Basen (8, 13) erstreckt, die mit der zentralen Welle (20) verschweißt sind, die durch die Tragstruktur mittels Lagern an jeweiligen Unterböden (9, 15) der letzteren (2) gehalten wird, wobei der Umfang davon von dem Rotor mittels einer Krone von vertikalen Blattachsen (27), parallel zu der zentralen Welle (20) verbunden ist, wobei an jeder ein vertikales Blatt in Eingriff gebracht ist, das einen horizontaler Abschnitt vom konkav-konvexen Typ (11, 12) hat, wobei jedes Blatt geeignet ist, um um 90 ° um die eigene Achse gedreht zu werden;
• jede Schaufel an einer oberen kleinen Scheibe (25) angehängt ist, die unterhalb der oberen Basis des Rotors angeordnet ist, wobei die obere kleine Scheibe angetrieben ist, um das Blatt damit zu drehen;
• das Blatt an der unteren Seite mit einer jeweiligen unteren kleinen Scheibe (22), die oberhalb der unteren Basis des Rotors angeordnet ist, in einem Paar kreuzartiger Nuten in der unteren kleinen Scheibe in Eingriff kommt:
eine erste tangential angeordnete (26) Nut und eine zweite radial angeordnet (28), wobei beide auf der oberen Oberfläche der unteren kleinen Scheibe ausgebildet sind, wobei die untere kleine Scheibe in einer Aushöhlung der unteren Basis aufgenommen ist, die mit vertikalen Nuten versehen ist, in die entsprechende Dorne der unteren kleinen Scheibe eingesetzt sind, um die Translation davon gemäß einer vertikalen Achse zu ermöglichen, die jedoch deren Drehung verhindert, um das Blatt zu beschränken, wenn es in den kreuzartigen Nuten in Eingriff steht;
• die wiegenartige Tragstruktur schwenkbar ausgebildet ist, so dass sie die gleiche Aufwind- und Abwindseite hat, wobei die wiegenartige Tragstruktur aufweist: eine erste Einrichtung (A) (24) zur Rotation der Blätter, die aufwindseitig angeordnet ist, um die jeweiligen Blätter um 90° zu rotieren, indem deren Orientierung von tangential zu radial geändert wird; und eine zweite Einrichtung (B) (23) zur Rotation der Blätter, die abwindseitig angeordnet ist, um die jeweiligen Blätter um 90° zu rotieren, indem deren Orientierung von radial zu tangential geändert wird, wobei beide Rotationseinrichtungen so wirken, dass sie in den jeweiligen unteren kleinen Scheiben die unteren Enden der Blätter in den Nuten aus dem Eingriff oder in Eingriff bringen, indem die unteren kleinen Scheiben nach oben und unten gehen, wobei das Blatt an der oberen kleinen Scheibe hängen bleibt, wobei das Blatt und die jeweilige untere kleine Scheibe durch die vertikale Blattachse (27) in der Achse gehalten werden;
so dass die Blätter an der zweiten Einrichtung (B) tangential angeordnet sind, mit der jeweiligen konkaven Seite in Richtung der Innenseite gerichtet, indem sie zu einer auf der Seite des Rotors gegen den Wind liegenden, halbzylindrischen Gruppe von verketteten Blättern (12) ausgerichtet sind, wohingegen sich die Blätter an der ersten Vorrichtung (A), indem sie sich von dem Halbzylinder lösen, radial anordnen, so dass die Blätter, die an der Seite zugunsten des Windes liegen, ihre konkave Seite zur Windrichtung (11) zeigen; und
so dass es durch Aktivierung nur von der zweiten Rotationseinrichtung (B) möglich ist, alle Blätter tangential anzuordnen, um einen vollständigen peripheren Zylinder zu bilden, um die Windturbine (49) zum Wind zu schließen.

2. Turmartige Windturbine nach Anspruch 1, bei der die wiegenartige schwenkende Tragstruktur gemäß der Windrichtung mittels Lagern auf einer zylindrischen Basis (1) ruht, die am Boden verankert ist, und die geeignet ist, das untere Ende der zentralen Welle, den elektrischen Generator (21) und mögliche Akkumulatoren aufzunehmen.

3. Turmartige Windturbine nach Anspruch 1 oder 2, bei der oberhalb der oberen Basis des Turms eine wiederverschließbare Kuppel bereitgestellt ist, die durch eine Wiege gebildet ist, die wie eine Krone geformt ist und einen zusätzlichen Rotor enthält, wobei:
• der vorgenannte Rotor aus einem kugelförmigen Segment mit zwei Basen gebildet ist, die sich von einer deckelartigen oberen Basis (29) und einer scheibenartigen unteren Basis (33) erstrecken, wobei diese Basen durch eine vertikale zentrale Welle (20) und eine zusätzliche zentrale Welle (38) außerhalb und koaxial zu der vorherigen zentralen Welle verbunden sind;
• die Basen des Rotors peripher durch Scheiben der Kugel (32) verbunden sind, die jeweilige Blätter bilden, die Wind sammeln können, die durch die getrennte Drehung jeder Scheibe seitlich gekippt werden können um eine jeweilige schräge sekundäre Achse (30), die koplanar zu der zusätzlichen zentralen Achse ist, die an den genannten Basen des Rotors (39) angelenkt und mittels spezieller Zahnräder (31, 37) mit der zusätzlichen zentralen Welle gekoppelt ist;
• die vorgenannte kronenartige Wiege eine untere Basis (9), die mit der oberen Basis der Tragstruktur des Turms zusammenfällt, und eine deckelartige obere Basis (48), die diejenige des Rotors der Kuppel überhängt, und von dieser entkoppelt ist, aufweist, wobei die Basen durch Wände (47) mit einem gekrümmten Profil außerhalb des Rotors verbunden sind;
• die Drehung der zusätzlichen zentralen Welle die Scheiben der Kugel von einer Konfiguration maximaler Öffnung zu dem Wind zu einer Schließkonfiguration der Kuppel und umgekehrt dreht.

## Revendications

1. Turbine à vent à axe vertical du type tour, comprenant une structure de soutien de type berceau (2)
comprenant et soutenant un rotor avec axe vertical, coaxial à celui-ci, avec un arbre central (20) connecté à un générateur électrique, dans lequel :
- le rotor s'étend entre deux bases horizontales (8, 13) formées comme un disque, soudées à l'arbre central (20) soutenu par ladite structure de soutien au moyen de paliers au niveau de socles respectifs (9, 15) de ceux-ci (2), la périphérie dudit rotor est connectée au moyen d'une couronne d'axes de lames verticales (27) parallèle à l'arbre central (20), sur chacune est engagée une lame verticale qui a une section horizontale de type concavo-convexe (11, 12), la lame étant apte à être pivotée de 90° autour de son propre axe ;
- chaque lame est suspendue à un petit disque supérieur (25) placé en-dessous de la base supérieure du rotor, le petit disque supérieur étant entraîné pour faire pivoter ladite lame avec celui-ci ;
- la lame s'engage sur le côté inférieur à un petit disque inférieur respectif (22), disposé au-dessus de la base inférieure du rotor, dans une paire de rainures en forme de croix dans ledit petit disque inférieur ;
une première rainure disposée tangentiellement (26) et une seconde disposée radialement (28), les deux étant formées sur la surface supérieure du petit disque inférieur, le petit disque inférieur étant logé dans une cavité de la base inférieure, munie de rainures verticales dans lesquelles les rayons respectifs du petit disque inférieur sont insérés, permettant la translation de celui-ci selon un axe vertical mais empêchant la rotation de celui-ci de sorte à contraindre la lame lorsqu'elle est engagée dans lesdites rainures en forme de croix ;
- la structure de soutien de type berceau est orientable de sorte à avoir le même côté face au vent et sous le vent, la structure de soutien de type berceau comprenant : un premier dispositif (A) (24) de rotation des lames disposé face au vent, pour faire pivoter de 90° les lames respectives en changeant l'orientation de ces dernières de tangentielle à radiale ; et un second dispositif (B) (23) de rotation des lames disposé sous le vent, pour faire pivoter de 90° les lames respectives en changeant l'orientation de ces dernières de radiale à tangentielle, les deux dispositifs de rotation agissant de sorte à désengager ou à engager dans les petits disques inférieurs respectifs les extrémités inférieures des lames dans lesdites rainures, en faisant monter et descendre lesdits petits disques inférieurs, la lame restant suspendue au petit disque inférieur, ladite lame et le petit disque inférieur respectif étant maintenus dans l'axe par ledit axe de lames verticales (27) ;
de telle sorte que les lames du second dispositif (B) se disposent tangentiellement avec le côté concave respectif dirigé vers l'intérieur en s'alignant avec un groupe semi-cylindrique de lames concaténées (12) reposant sur le côté du rotor contre le vent, tandis que les lames au niveau du premier dispositif (A), en se détachant dudit semi-cylindre, se disposent radialement, de telle sorte que les lames reposant sur le côté dans le sens du vent montrent le côté concave de celui-ci dans le sens du vent (11) ; et
de telle sorte que, en activant le second dispositif de rotation uniquement (B) il est possible de disposer toutes les lames tangentiellement pour former un cylindre périphérique complet de sorte à fermer au vent ladite turbine à vent (49).

2. Turbine à vent du type tour selon la revendication 1, dans laquelle ladite structure de soutien orientable de type berceau selon le sens du vent repose au moyen de paliers sur une base cylindrique (1) ancrée dans le sol, apte à recevoir l'extrémité inférieure dudit arbre central, le générateur électrique (21) et de possibles accumulateurs.

3. Turbine à vent du type tour selon la revendication 1 ou 2, dans laquelle, au-dessus de ladite base supérieure de la tour, un dôme refermable est fourni, composé d'un berceau en forme de couronne contenant un rotor supplémentaire, dans lequel :
- le rotor susmentionné est composé d'un segment sphérique avec deux bases s'étendant entre une base supérieure en forme de couvercle (29) et une base inférieure en forme de disque (33), ces bases étant liées par un arbre central vertical (20) et un arbre central supplémentaire (38) à l'extérieur et coaxial à l'arbre central précédent ;
- les bases du rotor sont connectées de manière périphérique par des tranches de sphère (32) qui constituent des lames respectives aptes à collecter le vent, qui peuvent être inclinées latéralement via la rotation séparée de chaque tranche autour d'un axe secondaire oblique respectif (30), coplanaire au dit axe central supplémentaire, basculant sur lesdites bases du rotor (39) et raccordées au moyen d'engrenages spécifiques (31, 37) à l'arbre central supplémentaire ;
- le berceau en forme de couronne susmentionné comprend une base inférieure (9), qui coïncide avec la base supérieure de la structure de soutien de la tour, et une base supérieure en forme de couvercle (48), surplombant celle du rotor du dôme, et désolidarisé de celui-ci, lesdites bases étant connectées par des murs (47) à profil courbe, à l'extérieur du rotor ;
- la rotation de l'arbre central supplémentaire fait pivoter lesdites tranches de sphère d'une configuration d'ouverture maximale au vent à une configuration de fermeture du dôme et vice-versa.
